Europäisches Patentamt

European Patent Office

Office européen des brevets

(19)

(11) Numéro de publication: **0 235 035**
**B1**

## (12) FASCICULE DE BREVET EUROPEEN

(45) Date de publication du fascicule du brevet:
10.05.89

(21) Numéro de dépôt: 87400373.4

(22) Date de dépôt: 20.02.87

(51) Int. Cl.⁴: **B60T 13/74**, B60T 13/58,
B60T 17/08, B61H 15/00

(54) **Bloc de commande de frein à ressort d'actionnement et son application à un système de freinage.**

(30) Priorité: 28.02.86 FR 8602817

(43) Date de publication de la demande:
02.09.87 Bulletin 87/36

(45) Mention de la délivrance du brevet:
10.05.89 Bulletin 89/19

(84) Etats contractants désignés:
AT BE CH DE ES GB IT LI NL SE

(56) Documents cités:
EP-A- 0 166 156
WO-A-83/00059
GB-A- 2 071 796
US-A- 3 893 544
US-A- 4 395 883

(73) Titulaire: **WABCO WESTINGHOUSE EQUIPEMENTS
FERROVIAIRES, Société Anonyme dite:, 2 boulevard
Westinghouse B.P. 2, F-93270 Sevran(FR)**
Titulaire: **REGIE AUTONOME DES TRANSPORTS
PARISIENS "RATP", 53 ter, Quai des Grands Augustins,
F-75271 Paris Cédex 06(FR)**

(72) Inventeur: **Grenier, Michel, 17, rue Clos Richard,
F-77400 Dampart(FR)**
Inventeur: **De La Gorce, Jean-Etienne, 72 Quai de la
Loire, F-75019 Paris(FR)**
Inventeur: **Cieplinski, Daniel, 20-24 de la Procession,
F-93250 Villemomble(FR)**
Inventeur: **Leturgie, Gérard, 57 rue Pasteur Butry
S/OISE, F-95430 Auvers sur Oise(FR)**
Inventeur: **Thurin, Yves, 28 Avenue de Piple,
F-94370 Sucy en Brie(FR)**
Inventeur: **Meret, Laurent, 37 Avenue Numance Bouel,
F-91800 Brunoy(FR)**
Inventeur: **Doireau, Christian, 50 Bd St Marcel,
F-75005 Paris(FR)**

(74) Mandataire: **Hirsch, Marc-Roger, Cabinet Hirsch 34 rue
de Bassano, F-75008 Paris(FR)**

### Description

La présente invention se rapporte à un bloc de commande de freins pour véhicule, du type comportant au moins un ressort d'actionnement axial des freins, tel qu'un ressort hélicoïdal maintenu en position de desserrage des freins à l'encontre de sa force de réaction élastique par un système vis-écrou susceptible d'être entraîné en rotation par un moteur électrique dont le courant électrique d'alimentation est susceptible de régler la force de freinage du bloc, constituée de la force de réaction axiale du ressort diminuée de la force soustractive provoquée par le système vis-écrou entraîné en rotation par le moteur électrique. Une telle construction est connue du document GB-A 2 071 796. L'invention concerne également l'application de ce bloc de freinage à un système de freinage de service, de parc, et/ou d'urgence, équipé, le cas échéant, de moyens d'anti-enrayage.

Afin de disposer d'un frein à ressort dont le desserrage ne nécessite pas l'emploi d'un fluide sous pression tel que de l'air comprimé ou de l'huile sous pression, on a déjà proposé et réalisé des blocs de freinage dont l'effort de serrage est fourni par un ressort précontraint tel qu'un ressort hélicoïdal et l'effort de desserrage ajustable est réalisé par un moteur électrique qui délivre, par exemple, un effort axial de desserrage via une vis présentant des caractéristiques de réversibilité telles qu'une vis à billes. Dans un tel bloc de freinage, le moteur qui est généralement un moteur à courant continu, à excitation séparée et constante par des aimants permanents, est maintenu sous pleine tension en position de desserrage des freins. Le serrage progressif des freins est obtenu par diminution progressive de la tension du moteur, c'est-à-dire selon le procédé de réglage le plus généralement utilisé, du courant continu traversant les bobinages rotor du moteur.

L'effort de freinage est alors la résultante de la différence entre d'une part, la force de réaction du ressort considérée comme constante mais qui décroît légèrement avec la course de détente du ressort, et en principe diminue légèrement dans le temps par suite d'un effet de relaxation du métal du ressort et, d'autre part, la force de desserrage réglable (par réglage du courant moteur), transmise par la vis à billes qui présente une hystérésis limitée et acceptable de l'ordre de 10%.

Ces blocs de freinage qui présentent les avantages des freins à ressort relatifs à la sûreté de fonctionnement du fait que l'on peut toujours interrompre l'effort de desserrage et à la facilité de mise en position de parc de longue durée par coupure du courant de desserrage, sont utilisés sur des véhicules où, pour des raisons d'encombrement et de facilité d'entretien, on désire supprimer le recours à une source de fluide sous pression pour le freinage, tout en passant au pilotage "tout électrique" des freins. Toutefois, les blocs de freinage doivent être placés à proximité immédiate des pistes de freinage sur lesquelles ils agissent et qui sont constituées généralement par les faces latérales d'un disque de frein et le volume important des moyens de moteur électrique, de ressort et de rattrapage du jeu entre les pistes et les garnitures de frottement conduit généralement à un ensemble volumineux très difficile à loger dans les châssis de bogie des véhicules ferroviaires légers tels que les trams, ou rapides tels que les trains à grande vitesse, qui sont les plus aptes à recevoir ces blocs de freinage à haute sécurité et à pilotage "tout électrique".

L'un des buts de la présente invention est précisément de proposer un bloc de commande de frein qui permette de conserver les qualités du frein à ressort desserré par un moteur électrique et qui puisse être logé plus aisément dans le châssis ou le bogie du véhicule tout en agissant simultanément sur plusieurs pistes de freinage telles que celles des disques de freins multiples d'un bogie ferroviaire à grande vitesse.

A cet effet, le ressort est relié aux freins par l'intermédiaire d'au moins un maître cylindre hydraulique dont le piston est actionné axialement par une couronne de butée du ressort, cette couronne étant reliée mécaniquement au rotor du moteur électrique via le système vis-écrou et au moins un raccord de fluide hydraulique du maître cylindre est relié de façon connue en soi à au moins un cylindre récepteur dont le piston est susceptible d'appliquer au moins une garniture de friction des freins sur une piste de friction du véhicule de manière que la liaison entre le ressort d'actionnement et la garniture de friction s'effectue à distance au moyen d'une colonne de fluide hydraulique qui est apte à transmettre et à transformer l'effort axial de réaction du ressort d'actionnement et qui présente, le cas échéant, un volume variable apte à rattraper les jeux d'application de la garniture de friction.

Le bloc de commande de frein peut être constitué, d'une part, d'un ensemble mécanique-hydraulique contenant le système vis-écrou et le ressort d'actionnement et à une extrémité duquel est monté le maître cylindre et, d'autre part, d'un ensemble électrique constitué d'un moteur électrique rotatif dont le rotor est relié à un organe d'entraînement de l'écrou de la vis du système vis-écrou.

L'ensemble mécanique-hydraulique et l'ensemble électrique sont montés parallèlement l'un à l'autre sur un support de transmission dans lequel est disposé un organe de transmission souple, comportant le cas échéant une démultiplication, entre l'organe d'entraînement et la vis ou l'écrou du système vis-écrou tel qu'une chaîne ou une courroie, de manière à réduire la longueur du bloc de commande, ou bien en variante, l'ensemble mécanique-hydraulique et l'ensemble électrique sont montés en série de telle façon que le rotor du moteur électrique soit couplé directement à la vis ou à l'écrou du système vis-écrou, de manière à réduire le diamètre d'encombrement du bloc de commande. Lorsque le ressort d'actionnement est un ressort hélicoïdal, le système vis-écrou est logé au moins partiellement à l'intérieur du ressort hélicoïdal.

Selon un mode de réalisation de l'invention assurant une sécurité supplémentaire, la couronne de butée d'extrémité est reliée mécaniquement à un mécanisme d'actionnement d'un frein de secours et/ou de parc du véhicule apte à se substituer au moins provisoirement au maître cylindre en cas de défaillance de celui-ci. La liaison mécanique entre la butée d'extrémité et le mécanisme d'actionnement est constituée par un levier articulé sur un axe solidaire du corps de bloc et dont une extrémité est en appui sur la couronne de butée d'extrémité du ressort d'actionnement tandis que l'autre extrémité est reliée à un câble d'un système à câble et gaine d'actionnement du frein de secours et/ou de parc dont la gaine est susceptible, respectivement, en position d'armement du frein de secours, d'être en appui sur une butée rigide et, en position inactive du frein de secours et/ou de parc, d'être libérée pour laisser agir librement le frein de service via le maître cylindre hydraulique. La butée rigide est mobile et est susceptible, soit d'être rappelée en position active, soit d'être amenée en position inactive libérant la gaine, par un organe télécommandé tel qu'un vérin ou un moteur électrique.

Selon encore un autre mode de réalisation, le maître cylindrique hydraulique est doté de moyens de précourse aptes à provoquer une émission initiale de fluide hydraulique à grand débit sous pression réduite pour réaliser l'approche initiale des garnitures de freinage sur les pistes de freinage et à isoler par un clapet anti-retour le circuit de freinage dès que la pression d'application des garnitures dépasse la pression maximale possible pour le circuit à grand débit, de manière à mieux utiliser l'énergie du ressort d'actionnement pour l'application des garnitures de friction sur leurs pistes de friction.

Lorsque le bloc de commande de frein selon l'invention est appliqué à un système de freinage de parc, le moteur électrique est également susceptible d'être alimenté pour être entraîné en rotation en sens inverse avant une opération de parcage, c'est-à-dire dans le sens où le système vis-écrou provoque sur la couronne de butée du ressort d'actionnement, un effort supplémentaire sur le maître cylindre qui s'ajoute à l'effort de réaction élastique du ressort d'actionnement, de manière à provoquer un supplément d'effort d'application des freins et à inverser en situation de parcage l'hystérésis du système vis-écrou après coupure du courant électrique inverse sur le moteur électrique.

En variante, le moteur électrique est également susceptible d'être entraîné en rotation en sens inverse en situation de freinage d'urgence du véhicule, de manière à provoquer un supplément d'effort de freinage correspondant au freinage d'urgence.

Lorsque le bloc de freinage est inclus dans un système de freinage équipé de moyens d'anti-enrayage, c'est-à-dire de desserrage temporaire des freins en cas de tendance au blocage d'au moins une roue du véhicule freiné par ce bloc, le moteur électrique est susceptible d'être alimenté pendant les phases de desserrage temporaire ou "d'anti-enrayage" par un courant de desserrage supérieur au courant normal de desserrage total des freins, de manière à accélérer la rotation de desserrage du système vis-écrou pendant ces phases de desserrage "d'anti-enrayage" des freins.

Selon une autre variante du procédé d'application des blocs de freinage selon l'invention, pour assurer un desserrage total des freins, le moteur électrique est alimenté pendant la phase de desserrage proprement dit avec un courant électrique supérieur à celui nécessaire pour assurer la compression du ressort d'actionnement en position de desserrage des freins, puis après ce desserrage, est alimenté avec un courant électrique inférieur à celui nécessaire pour assurer cette compression du ressort mais suffisant pout maintenir les freins en position de desserrage total en utilisant l'hystérésis de friction du système vis-écrou, de manière à diminuer la charge thermique du moteur électrique en position freins desserrés.

D'autres buts, avantages et caractéristiques de l'invention apparaîtront à la lecture de la description d'un mode de réalisation de l'invention, faite à titre non limitatif et en regard du dessin annexé où:

- la figure 1 est une représentation schématique et en coupe du bloc de freinage selon l'invention, relié à des étriers de freins à disque et à un système d'actionnement de frein de parc et/ou de secours pour constituer un système de freinage de bogie ferroviaire;
- la figure 2 est une vue côté partielle (notamment sans la commande du frein de parc), capot arrière enlevé, du bloc de freinage de la figure 1.

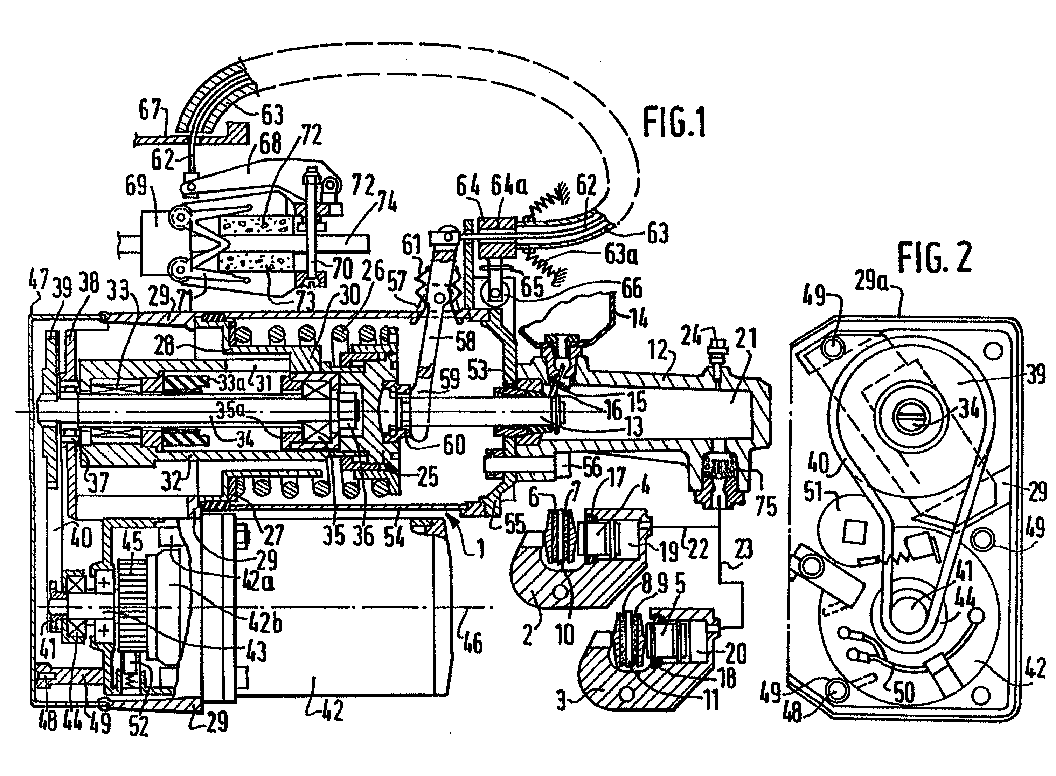

Le bloc de freinage 1 représenté à la figure 1 est destiné principalement à actionner des étriers de freins 2 et 3 à commande hydraulique dont les pistons 4 et 5 appliquent, sous l'effet d'une pression hydraulique, des garnitures de friction 6, 7 et, respectivement 8, 9, sur les pistes de frottement de disques de frein 10 et 11. La pression hydraulique est engendrée par un maître cylindre 12 de type connu, par exemple à plongeur 13 et qui est susceptible d'être réalimenté en fluide hydraulique à partir d'un réservoir de fluide 14 à travers un clapet anti-retour 15 maintenu en position ouverte par un rebord 16 du plongeur 13, lorsque celui-ci est en position inactive ou de retrait. Afin de réaliser un rattrapage de jeu automatique, les pistons 4 et 5 des étriers 2 et 3 coopèrent, par exemple avec des moyens frotteurs et élastiques 17 et 18, tels que des segments et/ou des rondelles élastiques, qui s'opposent au recul des pistons 4 et 5 au-delà de la valeur normale du jeu lorsque ces pistons ont avancé par suite de l'usure des garnitures de friction ou des pistes de frottement des disques 10 et 11. Les chambres hydrauliques ou de pression 19 et 20 des étriers de frein 2 et 3 sont reliées à la chambre de pression 21 du maître cylindre par des conduites de liaison 22 et 23 qui présentent des parties souples permettant un débattement entre le maître cylindre 12 et les étriers de frein qui peuvent être en nombre quelconque, correspondant par exemple au nombre de disques de frein d'un bogie ferroviaire, nombre qui peut atteindre huit disques sur les bogies du train à grande vitesse (TGV) mais peut se limiter à deux dans le cas d'un bogie moteur destiné à un véhicule de transit rapide du type métro ou tram.

Des moyens de purge de l'air du circuit hydraulique sont prévus sur les parties hautes de ce circuit, notamment des chambres hydrauliques 19 et 20 des étriers et de la chambre de pression 21 du maître-cylindre 12 (seule la vis de purge 24 du maître cylindre 12 a été représentée).

Selon l'invention, le plongeur 13 du maître cylindre 12 est relié par une couronne de butée d'extrémité 25 à un ressort d'actionnement axial 26 constitué, ici, par un ressort hélicoïdal précontraint en appui par son autre extrémité via une rondelle de réglage 27 sur un tube d'appui 28 lui-même en appui sur un corps de support 29 du bloc de freinage 1. Le tube d'appui 28 se prolonge en direction de la couronne de butée 25 par des doigts de guidage 30 (un seul doigt est représenté en coupe) qui se logent dans des rainures de guidage 31 (une seule rainure est représentée en coupe) d'un tube de rappel 32 qui porte, à son extrémité du côté du plongeur 13, la couronne de butée 25. L'autre extrémité du tube de rappel 32 porte un écrou à billes 33 représenté schématiquement sur la figure 1 et qui coopère avec une vis à billes 34 (vis présentant une rainure hélicoïdale dans laquelle roulent des billes en roulement continu via un chemin de roulement de retour) qui s'étend sur toute la longueur du tube de rappel 32. La vis à billes 34 est montée rotative entre deux paliers dont l'un 35 est porté par les doigts de guidage 30 (au nombre minimum de trois pour assurer un bon centrage) et maintenue en place par un écrou 36 de blocage de la vis à billes 34.

L'autre palier de guidage 37 de la vis à billes 34 est porté par un flasque 38 du corps de support 29, au-delà duquel la vis à billes 34 est rendue solidaire, par exemple par clavetage, d'une couronne 39 d'actionnement en rotation de la vis 34. La couronne 39 est couplée, par exemple par une chaîne 40, au pignon 41 de sortie d'un moteur électrique 42. La liaison entre le pignon 41 et l'arbre 43 du moteur électrique s'effectue, par exemple, par une roue libre unidirectionnelle 44 dont le rôle sera précisé ci-après. Le moteur électrique, qui est ici un moteur à courant continu et à collecteur 45, est monté flasqué sur le corps de support 29 avec son axe 46 parallèle à l'axe de la vis à billes 34.

On voit, sur la figure 1, que le mécanisme de liaison à chaîne entre la vis à billes 34 et le moteur électrique 42 est recouvert de façon étanche par un capot 47 appliqué sur un rebord 29a (figure 2) du corps de support 29 par l'intermédiaire de vis 48 fixées sur des saillies 49 de ce corps. Sur la vue de côté de la figure 2, où le capot 47 est enlevé, on voit les connections électriques 50 du moteur électrique 42 et le tendeur de chaîne 51. On comprend à partir des figures 1 et 2 que la mise sous tension du moteur électrique 42 (constituée ici d'un stator à aimants permanents 42a et d'un rotor 42b alimenté en courant continu réglable par l'intermédiaire du collecteur 45 et de balais 52 dont un seul est représenté) permet de faire tourner la vis à billes 34 dans le sens qui comprime le ressort 26 pour desserrer les freins.

Le mécanisme de déplacement axial constitué par le ressort 26, l'écrou à billes 33, la vis à billes 34, le tube de rappel 32, la couronne de butée 25 et le plongeur 13 qui traverse un palier étanche 53, est logé dans une enveloppe cylindrique 54 flasquée sur le support 29 et qui se termine par un flasque de fermeture 55 portant le palier étanche 53 du plongeur 13 et sur lequel est fixé rigidement par des vis 56 le maître cylindre 12. Au voisinage du flasque 55, l'enveloppe 54 porte un support extérieur 57 sur lequel est articulé un levier de frein de secours ou de parc 58 qui vient en appui par un fourchette 59 sur une portée 60 de la couronne de butée 25. Le levier 58 traverse de façon étanche l'enveloppe 54 à l'aide d'un soufflet élastique 61 et son extrémité extérieure à l'enveloppe 54 est articulée à un câble 62 susceptible de glisser dans une gaine 63 souple en flexion et relativement rigide en compression et qui est en appui, du côté du levier 58 sur un support 64 rotatif autour d'un axe 65 (dans le plan de la figure 1) et commandé par un piston 66 (d'axe perpendiculaire au plan de la figure 1) et respectivement, du côté opposé, sur un support fixe 67. La gaine est repoussée sur le support fixe 67 par des ressorts de rappel ou équivalents 63a.

Le câble 62 est relié au levier 68 de serrage d'un étrier de frein de parc 69 combiné à une tige filetée de liaison 70, à un ressort de desserrage 71 et à des garnitures de friction 72 et 73 pour constituer, avec un disque de frein 74, un frein de secours ou de parc. Dans le cas où l'on désire utiliser un frein de parc de grande puissance pour un bogie moteur ferroviaire, on peut utiliser un disque 74 relié mécaniquement à la transmission de l'essieu par une forte démultiplication (par exemple relié directement à l'arbre du moteur électrique d'entraînement) et des garnitures de friction 72 et 73 à haut coefficient de frottement telles que des garnitures de friction en élastomère. Lorsque le frein de parc ne doit pas être actionné, le piston 66 est soumis à l'action d'une pression de fluide ou d'un ressort (solution de sécurité) et fait pivoter le support 64 autour de l'axe 65, de telle façon que la gaine 63 rappelée par les ressorts 63a ne trouve pas de point d'appui et que le câble 62 ne soit pas actionné à l'encontre du ressort de desserrage 71 lorsque la fourchette 59 du levier 58 est entraînée vers la droite de la figure.

Le bloc de freinage 1 relativement lourd est fixé sur le châssis de bogie ou du véhicule et est relié par des canalisations souples aux étriers de frein (par des flexibles de frein) et respectivement par le système souple à câble et gaine à des étriers de frein de secours.

Le fonctionnement du bloc et du système de freinage qui viennent d'être décrits vont maintenant être explicités. En service normal du véhicule sur lequel est monté le bloc de freinage, le frein de service et de parc ou de secours est desserré par mise sous tension du moteur 42 qui, à partir d'une position frein serré, entraîne en rotation via la roue libre 44, le pignon 41 et en sens inverse, par l'intermédiaire de la chaîne 40, la couronne 39. La vis à billes 34 est ainsi entraînée en rotation avec un couple multiplié par le rapport des diamètres de la couronne 39 et du pignon 41, dans le sens qui repousse l'écrou à billes 33 vers la gauche de la figure en comprimant le ressort 26 jusqu'à une position de butée (la butée n'a pas été représentée sur le dessin) correspondant à celle représentée à la figure 1. Dans cette position de desserrage des freins, le rebord 16 du plongeur 13 ouvre le clapet anti-retour 15, ce qui relie les chambres hydrauliques 19 et 20 des étriers de frein au réservoir de fluide hydraulique 14 et met le circuit hydraulique à la pression atmosphérique. Les garnitures de friction 6 à 9 des étriers de frein 2 et 3 sont maintenues à proximité des pistes de friction des disques 10 et 11 avec un faible jeu par suite de la friction importante des moyens frotteurs et élastiques 17 et 18. Aussi longtemps que le moteur 42 est traversé par une intensité électrique suffisante pour s'opposer, avec les forces de frottement, à la rotation du pignon 41 en sens inverse sous l'effet de la force de réaction du ressort 26, ce ressort 26 reste comprimé et le frein est desserré.

Pour déclencher un freinage, le circuit électronique et électrique de commande de l'alimentation électrique du moteur 42 provoque une diminution du courant d'alimentation du rotor de ce moteur à une valeur inférieure à celle suffisant à maintenir, avec les forces de friction le ressort 26 dans la position comprimée représentée sur la figure. Le ressort 26 qui ne peut plus être retenu par le couple du moteur 42 entraîne donc la vis 34 en rotation en sens inverse du couple du moteur et se déplace vers la droite de la figure en poussant le plongeur 13 à l'intérieur de la chambre de pression 21 du maître cylindre 12. Le clapet 15 se referme, isolant le circuit hydraulique qui monte en pression et applique, par l'intermédiaire des pistons 4 et 5 des étriers, les garnitures de friction 6 à 9 sur les pistes de friction de disques de frein 10 et 11. Les pistons 4 et 5 présentent habituellement des diamètres supérieurs à celui du plongeur 13, ce qui permet d'amplifier plusieurs fois la force de réaction du ressort 26 sur chacune des garnitures de friction. Lorsque la pression régnant dans le circuit hydraulique équilibre, avec le couple subsistant sur l'arbre 43 du moteur 42, la force de réaction du ressort 26 qui diminue légèrement avec la détente de celui-ci, le déplacement du plongeur 13 s'arrête en position d'équilibre. Pendant le déplacement du ressort 26, la butée 60 de la couronne de butée 25 s'applique sur la fourchette 59 et fait pivoter le levier 58, mais celui-ci n'entraîne pas le déplacement du levier 68 à l'encontre du ressort de desserrage 71 du frein de parc, car le support 64 est effacé et une traction sur le câble 62 se traduit par un déplacement de la gaine 63 à l'encontre des ressorts de rappel 63a.

Pour augmenter les forces de freinage, une nouvelle réduction de l'intensité de desserrage qui traverse les bobinages du rotor 42b, à un taux suffisant pour vaincre les frottements d'hystérésis du couple écrou-vis à billes, provoque un nouveau déplacement vers la droite du plongeur 13. Pour provoquer un desserrage effectif des freins, il est nécessaire d'augmenter l'intensité qui traverse les bobinages du rotor du moteur d'une valeur suffisante pour vaincre l'hystérésis mécanique du système de ressort et du couple vis-écrou à billes. Le ressort 26 est alors comprimé d'une valeur supplémentaire et le plongeur 13 se déplace vers la gauche de la figure, ce qui augmente le volume du circuit hydraulique et provoque par détente une diminution de sa pression. On remarque que le circuit hydraulique est isolé de façon classique, du côté des récepteurs constitués par les étriers de frein, par un clapet de pression résiduelle 75 qui maintient le circuit récepteur en légère surpression lorsqu'il est desserré pour éviter les rentrées d'air parasites, en plaquant les lèvres des garnitures d'étanchéité sur leurs portées.

Pour réaliser un freinage de parc, le frein de parc est tout d'abord armé en amenant, par le piston 66, le support de butée 64 dans la position représentée sur la figure 1, ce qui est possible en position frein desserré car les ressorts 63a repoussent la gaine 63 du câble 62 et la face du support 64 sur laquelle s'appuie la gaine peut présenter une légère pente qui permet au support 64 d'agir comme un coin qui repousse la gaine 63 par l'effet de pivotement imposé par le piston 66. Le câble 62 se loge dans une fente 64a du support. Pour terminer l'action du frein de parc, le courant électrique est coupé dans le bobinage du rotor 42b et le ressort 26 complètement libéré entraîne le plongeur 13 vers la droite de la figure en provoquant le plein serrage des freins à disque par les étriers 3 et 4 et un léger serrage du disque 74 par le levier 68 car la gaine 63 vient en butée sur le support de butée 64, dès que la fourchette 59 du levier 58 pivote vers la droite. On doit comprendre, en effet, que compte tenu du faible jeu qui existe entre les garnitures de frein de service 6 à 9 et les disques de frein correspondants 10 et 11, il suffit d'une faible course du plongeur 13 vers la droite de la figure pour provoquer un serrage à fond du frein de service.

Si une fuite d'huile se produit pendant le parcage du véhicule, le plus souvent à travers le clapet anti-retour 15, le plongeur 13 se déplace très lentement vers la droite jusqu'à ce que les butées caoutchouc 33a de l'écrou à billes 33 viennent en appui sur la couronne de butée 35a du roulement 35 de la vis 34, ou bien jusqu'à la butée du plongeur 13 sur le fond de la chambre hydraulique 21. Pour un réglage correct de la tige filetée de liaison 70 de l'étrier de frein de parc 69, le frein de parc est serré à fond par le câble 62 et c'est la fourchette 59 qui immobilise le ressort 26 dans son déplacement vers la droite de la figure en transmettant au frein de parc à un coefficient de frottement élevé, la totalité de l'effort de réaction du ressort 26. Une transmission d'effort mécanique par leviers et système câble et gaine s'est ainsi substituée à la transmission hydraulique en cas de défaillance de celle-ci pendant un freinage de parc. Dans le cas où un freinage de service à fond est déclenché par coupure du courant électrique du rotor alors que le circuit hydraulique est défaillant, par exemple par suite de la rupture d'un flexible de liaison à un étrier de frein, le ressort 26 se détend violemment en entraînant le rotor 42b du moteur 42 en rotation à une vitesse élevée et au moment de la prise de contact brutale entre les butées caoutchouc 33a et la couronne 35a, l'arrêt de la rotation du rotor 42b provoquerait la rupture de la chaîne 40 si la roue libre unidirectionnelle 44 n'était pas interposée entre l'arbre 43 du rotor et le pignon 41. Grâce à cette roue libre 44, à l'arrêt brutal de la rotation de la vis 34 et du pignon 41, le rotor 42b du moteur électrique continue de tourner en évitant ainsi la casse de la chaîne 40.

Des nombreuses variantes d'adaptation et d'application du bloc de commande de frein selon l'invention sont possibles. La chaîne 40 peut être remplacée par une courroie pour donner plus de souplesse à la transmission et lui assurer une sorte de limitation de couple permettant de supprimer la roue libre 44. Le moteur 42 peut être un moteur d'un autre type qu'un moteur courant continu shunt à excitation par aimants, notamment un moteur à induction du type asynchrone ou synchrone-asynchrone ou pas à pas. Les récepteurs hydrauliques peuvent être de type divers et mixtes, par exemple pour frein à sabot et frein à disque avec des correcteurs de pression intercalaires.

Le bloc de freinage 1 comprend deux ensembles à fonction différentes: d'une part un ensemble mécanique-hydraulique contenant le système vis-écrou qui n'est pas nécessairement à billes et le ressort d'actionnement 26 ainsi que le maître cylindre hydraulique 12 qui peut être simple ou multiple, en montage en série ou parallèle et d'autre part, un ensemble électrique dont le rotor 42b est relié mécaniquement à l'écrou ou à la vis de l'ensemble vis-écrou. L'ensemble mécanique hydraulique et l'ensemble électrique peuvent être montés parallèlement l'un à l'autre comme représenté sur la figure 1, de manière à réduire la longueur du bloc de commande. Dans le même but, le système vis-écrou est logé le plus possible à l'intérieur du ressort hélicoïdal 26 qui peut être constitué de plusieurs ressorts empilés ou en parallèle, ou être remplacé par un empilage de rondelles Belleville.

Selon une autre forme de réalisation non représentée, l'ensemble mécanique hydraulique et l'ensemble électrique sont montés en série pour réduire l'encombrement transversal du bloc qui se présente alors sous la forme générale d'un cylindre allongé. La liaison entre le rotor du moteur électrique et l'ensemble vis-écrou est réalisée par couplage direct du rotor du moteur ou via un train d'engrenage réducteur, de préférence épicycloïdal, pour obtenir plus de compacité.

Selon une disposition particulièrement avantageuse, le maître cylindre hydraulique est par exemple du type décrit dans le brevet français publié sous le n° 2 562 957, c'est-à-dire est doté de moyens de précourse aptes à provoquer une émission initiale de fluide hydraulique à grand débit sous pression réduite, pour réaliser l'approche initiale des garnitures de freinage 6, 9, sur les pistes de freinage 10, 11 et à isoler par un clapet anti-retour le circuit de freinage dès que la pression d'application des garnitures 6 à 9 dépasse la pression maximale possible pour le circuit à grand débit, de manière à mieux utiliser l'énergie du ressort d'actionnement 26 pour l'application des garnitures de friction 6 à 9 sur leurs pistes de friction 10, 11. Il est ainsi possible de laisser plus de jeu entre les garnitures de friction 6 à 9 et les pistes de friction sans avoir à augmenter la course du ressort d'actionnement 26.

En supprimant d'une façon ou d'une autre la roue libre 44, le moteur électrique 42 peut être alimenté pour être entraîné en rotation en sens inverse avant une opération de parcage, c'est-à-dire dans le sens où le système vis-écrou 34, 33, provoque sur la couronne de butée 25 du ressort d'actionnement 26 un effort supplémentaire d'application sur le maître cylindre 12, qui s'ajoute à l'effort de réaction élastique du ressort d'actionnement 26, de manière à provoquer un supplément d'effort d'application des freins et à inverser, en situation de parcage, l'hystérésis du système vis-écrou 34, 33, après coupure du courant électrique inverse sur le moteur électrique 42. Le moteur électrique 42 est également susceptible d'être entraîné en rotation en sens inverse en situation de freinage d'urgence du véhicule, de manière à provoquer un supplément d'effort de freinage correspondant au freinage d'urgence. Lorsque le système de freinage est équipé de moyens d'anti-enrayage permettant un desserrage temporaire des freins en cas de tendance au blocage d'au moins une roue du véhicule freinée par ce bloc de freinage 1, le moteur électrique 42 est susceptible d'être alimenté pendant les phases de desserrage temporaire ou "d'anti-enrayage" par un courant de desserrage supérieur au courant normal de desserrage total des freins, de manière à accélérer la rotation de desserrage du système vis-écrou 34, 33 pendant ces phases de desserrage "d'anti-enrayage" des freins.

Pour assurer un desserrage total des freins, le moteur électrique 42 peut être alimenté pendant la phase de desserrage proprement dit avec un courant électrique supérieur à celui nécessaire pour assurer la compression du ressort d'actionnement 26 en position de desserrage total des freins, puis après ce desserrage, être alimenté avec un courant électrique inférieur à celui nécessaire pour assurer cette compression du ressort, mais suffisant pour maintenir les freins en position de desserrage total en utilisation l'hystérésis de friction du système vis-écrou 34, 33, de manière à diminuer la charge thermique permanente du moteur électrique en position frein desserré.

Les procédés d'application du bloc de freinage aux diverses conditions de service qui viennent d'être décrites, sont également applicables à un bloc de freinage à ressort et à desserrage par moteur électrique où la transmission des forces s'effectue par transmission mécanique directe sans utilisation d'un circuit hydraulique de transmission et de rattrapage de jeu. Le bloc de freinage à transmission hydraulique selon l'invention est relativement lourd et encombrant, mais présente une puissance élevée suffisante pour actionner toutes les garnitures de friction d'un bogie ferroviaire. Selon le mode de réalisation le plus avantageux, le bloc de freinage est logé dans le châssis de bogie en un endroit disposant de suffisamment de place et les conduites hydrauliques présentant des parties souples le reliant aux divers récepteurs de pression relativement légers qui sont répartis sur les divers actionneurs des freins et qui sont tous susceptibles d'être reliés au bloc par des transmissions souples y compris le frein de parc et de secours qui est relié, comme on l'a vu, par un système à câble et gaine susceptible d'épouser des courbes.

Bien entendu, la présente invention n'est pas limitée aux modes de réalisation décrits et représentés, mais elle est susceptible de nombreuses variantes accessibles à l'homme de l'art sans que l'on ne s'écarte de l'esprit de l'invention.

**Revendications**

1. Bloc de commande de freins pour véhicule, du type comportant au moins un ressort (26) d'actionnement axial des freins, tel qu'un ressort hélicoïdal, maintenu en position de desserrage des freins à l'encontre de sa force de réaction élastique par un système vis-écrou (33, 34) susceptible d'être entraîné en rotation par un moteur électrique (42), dont le courant électrique d'alimentation est susceptible de régler la force de freinage du bloc, constituée de la force de réaction axiale du ressort (26) diminuée de la force soustractive provoquée par le système vis-écrou (33, 34) entraîné en rotation par le moteur électrique (42), caractérisé en ce que le ressort (26) est relié aux freins par l'intermédiaire d'au moins un maître cylindre hydraulique (12) dont le piston (13) est actionné axialement par une couronne de butée (25) du ressort (26), cette couronne étant reliée mécaniquement au rotor (42b) du moteur électrique (42) via le système vis-écrou (33, 34) et en ce qu'au moins un raccord (22, 23) de fluide hydraulique du maître cylindre (12) est relié de façon connue en soi à au moins un cylindre récepteur (19, 20) dont le piston (4, 5) est susceptible d'appliquer au moins une garniture de friction (6, 9) des freins sur une piste de friction (10, 11) du véhicule.

2. Bloc de commande de frein selon la revendication 1, caractérisé en ce qu'il est constitué, d'une part, d'un ensemble mécanique-hydraulique contenant le système vis-écrou (33, 34) et le ressort d'actionnement (26) et à une extrémité duquel est monté le maître cylindre (12) et, d'autre part, d'un ensemble électrique (42) dont le rotor (42b) est relié à un organe d'entraînement (39, 40, 41) de l'écrou (33) ou de la vis (34) du système vis-écrou.

3. Bloc de commande de frein selon la revendication 2, caractérisé en ce que l'ensemble mécanique-hydraulique (33, 34; 26, 12) et l'ensemble électrique (42) sont montés parallèlement l'un à l'autre sur un support de transmission (29) dans lequel est disposé un organe de transmission souple (40), comportant le cas échéant une démultiplication, entre l'organe d'entraînement (39) et la vis (34) ou l'écrou (33) du système vis-écrou tel qu'une chaîne ou une courroie, de manière à réduire la longueur du bloc de commande (1).

4. Bloc de commande de frein selon la revendication 2, caractérisé en ce que l'ensemble mécanique-hydraulique (33, 34; 26, 12) et l'ensemble électrique (42) sont montés en série de telle façon que le rotor (42b) du moteur électrique (42) soit couplé directement à la vis (34) ou à l'écrou (33) du système vis-écrou de manière à réduire le diamètre d'encombrement du bloc de commande (1).

5. Bloc de commande de frein selon l'une des revendications 2 à 4, caractérisé en ce que, lorsque le ressort d'actionnement est un ressort hélicoïdal (26), le système vis-écrou (34, 33) est logé au moins partiellement à l'intérieur du ressort hélicoïdal.

6. Bloc de commande de frein selon l'une des revendications 1 à 5, caractérisé en ce que la couronne de butée d'extrémité (25) est reliée mécaniquement à un mécanisme d'actionnement (62, 68) d'un frein de secours et/ou de parc (69, 74) du véhicule, apte à se substituer au moins provisoirement au maître cylindre (12) en cas de défaillance de celui-ci.

7. Bloc de commande de frein selon la revendication 6, caractérisé en ce que la liaison mécanique entre la butée d'extrémité (25) et le mécanisme d'actionnement (62, 68) est constituée par un levier (58) articulé sur un axe solidaire du corps de bloc (54, 29) et dont une extrémité (59) est en appui sur la couronne de butée d'extrémité du ressort d'actionnement tandis que l'autre extrémité est reliée à un câble (62) d'un système à câble et gaine d'actionnement (63) du frein de secours et/ou de parc dont la gaine (63) est susceptible respectivement, en position d'armement du frein de secours, d'être en appui sur une butée rigide (64) et en position inactive du frein de secours et/ou de parc, d'être libérée pour laisser agir uniquement le frein de service via le maître cylindre hydraulique (12).

8. Bloc de commande de frein selon la revendication 7, caractérisé en ce que la butée rigide (64) est mobile et est susceptible, soit d'être rappelée en position active, soit d'être amenée en position inactive libérant la gaine (63), par un organe télécommandé (66), tel qu'un vérin ou un moteur électrique.

9. Bloc de commande de frein selon l'une des revendications 1 à 8, caractérisé en ce que le maître cylindre-hydraulique (12) est doté de moyens de précourse aptes à provoquer une émission initiale de fluide hydraulique à grand débit sous pression réduite, pour réaliser l'approche initiale des garnitures de freinage (6, 9) sur les pistes de freinage (10, 11) et à isoler par un clapet anti-retour le circuit de freinage dès que la pression d'application des garnitures (6 à 9) dépasse la pression maximale possible pour le circuit à grand débit de manière à mieux utiliser l'énergie du ressort d'actionnement (26) pour l'application des garnitures de friction (6 à 9) sur leurs pistes de friction (10, 11).

10. Application d'un bloc de commande de frein selon l'une des revendications 1 à 9 à un système de freinage de parc, caractérisée en ce que le moteur électrique (42) est également susceptible d'être alimenté pour être entraîné en rotation en sens inverse avant une opération de parcage, c'est-à-dire dans le sens où le système vis-écrou (34, 33) provoque sur la couronne de butée (25) du ressort d'actionnement (26) un effort supplémentaire d'application sur le maître cylindre (12) qui s'ajoute à l'effort de réaction élastique du ressort d'actionnement (26), de manière à provoquer un supplément d'effort d'application des freins et à inverser en situation de parcage l'hystérésis du système vis-écrou (34, 33) après coupure du courant électrique inverse sur le moteur électrique (42).

11. Application d'un bloc de commande de frein selon l'une des revendications 1 à 10, caractérisée en ce que le moteur électrique (42) est également susceptible d'être entraîné en rotation en sens inverse en situation de freinage d'urgence du véhicule, de manière à provoquer un supplément d'effort de freinage correspondant au freinage d'urgence.

12. Application d'un bloc de commande de frein selon l'une des revendications 1 à 11, à un système de freinage équipé de moyens d'anti-enrayage, c'est-à-dire de desserrage temporaire du frein en cas de tendance au blocage d'au moins une roue du véhicule freinée par ce bloc, caractérisée en ce que le moteur électrique (42) est susceptible d'être alimenté pendant les phases de desserrage temporaire ou "d'anti-enrayage" par un courant de desserrage supérieur au courant normal de desserrage total des freins, de manière à accélérer la rotation de desserrage du système vis-écrou (34, 33) pendant ces phases de desserrage "d'anti-enrayage" des freins.

13. Application d'un bloc de commande de frein selon l'une des revendications 1 à 12, caractérisée en ce que pour assurer un desserrage total des freins, le moteur électrique (42) est alimenté pendant la phase de desserrage proprement dit avec un courant électrique supérieur à celui nécessaire pour assurer la compression du ressort d'actionnement (26) en position de desserrage total des freins, puis après ce desserrage, est alimenté avec un courant électrique inférieur à celui nécessaire pour assurer cette compression du ressort mais suffisant pour maintenir les freins en position de desserrage total en utilisant l'hystérésis de friction du système vis-écrou (34, 33) de manière à diminuer la charge thermique permanente du moteur électrique en position freins desserrés.

## Patentansprüche

1. Bremsensteuerblock für Fahrzeug, welcher mindestens eine axiale Antriebsfeder (26) für Bremsen umfasst wie eine Schraubenfeder, welche in Bremslösungsstellung gegen ihre Federreaktionskraft durch ein Spindel-Mutter-System (33, 34), welches von einem Elektromotor (42) gedreht werden kann, dessen elektrischer Strom die Blockbremskraft, welche sich zusammensetzt aus der axialen elastischen Reaktionskraft der Feder (26) vermindert um die von dem Spindel-Mutter-System (33, 34), welches vom Elektromotor (42) gedreht wird, einstellen kann, festgehalten wird, dadurch gekennzeichnet, dass die Feder (26) mit den Bremsen mit Hilfe mindestens eines hyraulischen Hauptzylinders (12), dessen Kolben axial von einem Anschlagkranz (25) der Feder (26) angetrieben wird, in Verbindung steht, wobei dieser Kranz mechanisch mit dem Rotor (42b) des Elektromotors (42) über das Spindel-Mutter-System (33, 34) verbunden ist und dadurch, dass mindestens ein Anschlussstutzen (22, 23) für die Hydraulikflüssigkeit des Hauptzylinders (12) auf an sich bekannte Weise mit mindestens einem Nehmerzylinder (19, 20), dessen Kolben (4, 5) mindestens einen Reibbelag (6, 9) der Bremsen auf eine Reibfläche (10, 11) des Fahrzeuges auflegen kann, verbunden ist.

2. Bremsensteuerblock nach Anspruch 1, dadurch gekennzeichnet, dass er einerseits aus einer mechanisch-hydraulischen Einheit besteht, welche das Spindel-Mutter-System (33, 34) und die Antriebsfeder (26) enthält und an dessem einen Ende der Hauptzylinder (12) montiert ist und andererseits aus einer Elektroeinheit (42), dessen Rotor (42b) verbunden ist mit einem Antriebselement (39, 40, 41) der Mutter (33) oder der Spindel (34) des Spindel-Mutter-Systems.

3. Bremsensteuerblock nach dem Anspruch 2, dadurch gekennzeichnet, dass die mechanisch-hydraulische Einheit (33, 34; 26, 12) und die Elektroeinheit (42) parallel zueinander eingebaut sind in einem Kraftübertragungsgehäuse (29) in dem ein elastisches Kraftübertragungsglied (40) angeordnet ist, welches gegebenenfalls eine Untersetzung zwischen dem Antriebselement (39) und der Spindel (34) oder der Mutter des Spindel-Mutter-Systems umfasst wie eine Kette oder einen Treibriemen, um die Länge des Steuerblocks (1) zu verringern.

4. Bremsensteuerblock nach dem Anspruch 2, dadurch gekennzeichnet, dass die mechanisch-hydraulische Einheit (33, 34; 26, 12) und die Elektroeinheit (42) derart hintereinander montiert sind, dass der Rotor (42b) des Elektromotors (42) direkt an die Spindel (34) oder an die Mutter (33) des Spindel-Mutter-Systems gekuppelt ist, um den Raumdurchmesser des Bremsensteuerblocks (1) zu verringern.

5. Bremsensteuerblock nach einem der Ansprüche 2 bis 4, dadurch gekennzeichnet, dass, wenn die Antriebsfeder eine Schraubenfeder (26) ist, das Spindel-Mutter-System (33, 34) zumindest teilweise innerhalb der Schraubenfeder gelagert ist.

6. Bremsensteuerblock nach einem der Ansprüche 1 bis 5, dadurch gekennzeichnet, dass der Anschlagkranz (25) mechanisch mit einem Antriebsmechanismus (62, 68) einer Not- und/oder Standbremse (69, 74) des Fahrzeuges verbunden wird, welche in der Lage ist, zumindest provisorisch den Hauptzylinder (12) bei dessen Versagen zu ersetzen.

7. Bremsensteuerblock nach dem Anspruch 6, dadurch gekennzeichnet, dass die mechanische Verbindung zwischen dem Anschlagring (25) und dem Antriebsmechanismus (62, 68) durch einen Hebel (58), welcher auf einem mit dem Blockgehäuse (54, 29) befestigten Achsbolzen angelenkt ist und von dem ein Ende (59) auf dem Anschlagring der Antriebsfeder aufliegt während das andere Ende mit einem Kabel (62) eines Kabel- und Hüllen (63) - Systems zur Betätigung der Not- und/oder Standbremse dessen Hülle (63) jeweils bei angezogener Notbremse auf einem starren Anschlag (64) aufstossbar und bei gelöster Not- und/oder Standbremse lösbar ist, um nur die Betriebsbremse mit Hilfe des hydraulischen Hauptzylinders (12) wirken zu lassen, hergestellt wird.

8. Bremsensteuerblock nach dem Anspruch 7, dadurch gekennzeichnet, dass der starre Anschlag (64) beweglich ist und entweder aktiviert oder durch Befreiung der Hülle (63) mit Hilfe einer Fernsteuerungseinrichtung, wie einem Zylinder oder einem Elektromotor, inaktiviert werden kann.

9. Bremsensteuerblock nach einem der Ansprüche 1 bis 8, dadurch gekennzeichnet, dass der hydraulische Hauptzylinder (12) mit Vorschubmitteln ausgestattet ist, welche in der Lage sind, einen anfänglichen starken Ausfluss von Hydraulikflüssigkeit bei vermindertem Druck hervorzurufen um ein anfängliches Aufliegen der Bremsbeläge (6, 9) auf den Bremsflächen (10, 11) zu erreichen und den Bremskreislauf durch ein Rückschlagventil zu verschliessen, sobald der Anpressdruck der Beläge (6 bis 9) den möglichen Höchstdruck für den Kreislauf mit starkem Ausfluss überschreitet, um die Energie der Antriebsfeder (26) zum Auflegen der Reibbeläge (6 bis 9) auf ihren Reibflächen (10, 11) besser auszunutzen.

10. Anwendung eines Bremsensteuerblocks nach einem der Ansprüche 1 bis 9 auf ein Standbremssystem, dadurch gekennzeichnet, dass der Elektromotor (42) ebenfalls derart gespeist werden kann, dass er vor einem Parkmanöver in umgekehrter Richtung gedreht werden kann, das heisst in der Richtung wo das Spindel-Mutter-System (34, 33) auf dem Anschlagring (25) der Antriebsfeder (26) eine zusätzliche Auflagekraft auf den Hauptzylinder (12) ausübt, welcher zu der elastischen Reaktionskraft der Antriebsfeder (26) hinzukommt, um nach Abschaltung des entgegengerichteten Stroms am Elektromotor (42) eine zusätzliche Auflagekraft der Bremsen und beim Parken die Hysterese des Spindel-Mutter-Systems (34, 33) hervorzurufen.

11. Anwendung eines Bremsensteuerblocks nach einem der Ansprüche 1 bis 10, dadurch gekennzeichnet, dass der Elektromotor (42) ebenfalls im Falle einer Notbremsung des Fahrzeuges in umgekehrter Richtung gedreht werden kann, um eine der Notbremsung entsprechende zusätzliche Bremskraft zu erzeugen.

12. Anwendung eines Bremsensteuerblocks nach einem der Ansprüche 1 bis 11 auf ein mit Anti-Blockierschutzmitteln (ABS) ausgerüstetes Bremssystem, das heisst für ein vorübergehendes Lösen der Bremsen im Falle einer Blockierneigung mindestens eines des von diesem Block gebremsten Fahrzeugrades, dadurch gekennzeichnet, dass der Elektromotor (42) während der vorübergehenden Löse- oder "Blockierschutz"phasen von einem den normalen Gesamtlösestrom der Bremsen übersteigenden Lösestrom gespeist wird, derart dass die Lösedrehung des Spindel-Mutter-Systems (34, 33) während dieser Blockierschutzlösephasen der Bremsen beschleunigt wird.

13. Anwendung eines Bremsensteuerblocks nach einem der Ansprüche 1 bis 12, dadurch gekennzeichnet, dass der Elektromotor (42), um ein vollkommenes Lösen der Bremsen sicherzustellen, während der eigentlichen Lösephase mit einem über dem notwendigen Strom liegenden Strom gespeist wird, um das Zusammendrücken der Antriebsfeder (2), welche dem vollkommenen Lösen der Bremsen entspricht, sicherzustellen, dann nach diesem Lösen von einem unter dem für das Zusammendrücken der Feder erforderlichen aber zum Halten der Bremsen in vollständiger Lösestellung ausreichenden Strom gespeist wird unter Ausnutzung der Reibungshysterese des Spindel-Mutter-Systems (34, 33), um die dauernde Wärmebelastung des Elektromotors bei gelösten Bremsen zu verringern.

## Claims

1. Vehicle brake control unit, comprising at least one axial brake actuating spring (26), such as a helical spring, maintained in brake release position against the spring reaction force by a screw-nut system (33, 34) able to be rotatively driven by an electric motor (42), of which the electrical supply current is able to control the braking force of the unit, constituted of the axial reaction force of the spring (26) reduced by the substrating force provoked by the screw-nut system (33, 34) rotatively driven by the electric motor (42), characterized in that the spring (26) is connected to the brakes by means of at least one hydraulic master cylinder (12) of which the piston (13) is axially actuated by an abutment ring (25) of the spring (26), this ring being mechanically connected to the rotor (42b) of the electric motor (42) via the screw-nut system (33, 34) and in that at least one hydraulic fluid hose (22, 23) of the master cylinder (12) is connected in a manner known per se to at least one receiver cylinder (19, 20) of which the piston (4, 5) is able to apply at least one friction brake lining (6, 9) on a braking track (10, 11) of the vehicle.

2. Brake control unit according to claim 1, characterized in that it is instituted on one hand of a mechanical-hydraulic assembly comprising the screw-nut system (33, 34) and the actuating spring (26) and on one the end of which is mounted the master cylinder (12) and on the other hand of an electrical assembly (42) of which the rotor (42b) is connected to a driving member (39, 40, 41) of the nut (33) or of the screw (34) of the screw-nut system.

3. Brake control unit according to claim 2, characterized in that the mechanical-hydraulic assembly (33, 34; 26, 12) and the electrical assembly (42) are parallely mounted one to another on a transmission fronsing (29) in which is disposed a resilient transmission member (40), comprising eventually a demultiplication between the driving member (39) and the screw (34) or the nut (33) of the screw-nut system such as a chain or a belt, for reducing the length of the control unit (1).

4. Brake control unit according to claim 2, characterized in that the mechanical-hydraulic assembly (33, 34; 26, 12) and the electrical assembly (42) are series mounted for directly coupling the rotor (42b) of the electric motor (42) to the screw (34) or to the nut (33) of the screw-nut system whereby the bulkiness diameter of the control unit (1) is reduced.

5. Brake control unit according to one of the claims 2 to 4, characterized in that, when the actuating spring is a helical spring (26) the screw-nut system (34, 33) is housed at least partially inside the helical spring.

6. Brake control unit according to one of the claims 1 to 5, characterized in that the end abutment ring (25) is mechanically connected to an actuating mechanism (62, 68) of an emergency and/or park braking (69, 74) of the vehicle, able to replace at least provisionally the master cylinder (12) in case of its failure.

7. Brake control unit according to claim 6, characterized in that the mechanical connection between the end abutment (25) and the actuating mechanism (62, 68) is constituted by a lever (58) priotally connected on an axle attached to the unit body (54, 29) and of which one end (59) is in abutment on the end abutment ring of the actuating spring while the other end is connected to a cable (62) of a cable and sheath actuating system (63) of the emergency and/or park braking the sheath of which is respectively able, in active position of the emergency braking, to be applied on to a stiff abutment (64) and in inactive position of the emergency and/or park braking actuated to be released to have only the service braking via the hydraulic master cylinder (12).

8. Brake control unit according to claim 7, characterized in that the stiff abutment (64) is movable and to able either to be returned in an active position or to be placed in an inactive position releasing the sheath (63) by a remote control member (66) such as a fluid cylinder or an electric motor.

9. Brake control unit according to one of the claims 1 to 8, characterized in that the hydraulic master cylinder (12) is equipped with "prestroke" means able to provoke an initial high flow discharge of hydraulic fluid under reduced pressure for realizing initial application of the brake linings (6, 9) on the braking tracks (10, 11) and to close by a checkvalve the braking circuit as soon as the application pressure of the brake linings (6 to 9) exceeds the possible maximal pressure for the high flow circuit, whereby the actuating spring (26) power is better used for applying the brake lining (6 to 9) on their friction tracks (10, 11).

10. Application of a brake control unit according to one of the claims 1 to 9, to a park braking system, characterized in that the electrical motor (42) is also able to be supplied for being rotatively driven in an opposite direction before a park operation, that is in the direction where the screw-nut system (34, 33) provokes on the abutment ring (25) of the actuating spring (26) an additional application force on the master cylinder (12) which is added to the spring reaction force of the actuating spring (26) whereby an additional application force is applied on the brakes and, in parking situation, the hysteresis of the screw-nut system (34, 33) after cut-off of the inverted electrical current of the electric motor (42) is inverted.

11. Application of a brake control unit according to one of the claims 1 to 10, characterized in that the electric motor (42) is also able to be rotatively driven in the opposite direction in emergency braking situation of the vehicle, for provoking an additional braking force corresponding to the emergency braking.

12. Application of a brake control unit according to one of the claims 1 to 11, to a braking system equipped by "anti-skid" means, that is of temporary release of the brakes in the event of at least one of the vehicle, wheels braked by said unit is going to be blocked, characterized in that the electric motor (42) is able to be supplied during the phases of temporary release or of "anti-skid" by a release current superior to the normal current of total release of the brakes for accelerating the release rotation of the screw-nut system (34, 33) during these phases of anti-skid release of the brakes.

13. Application of a brake control unit according to one of the claims 1 to 12, characterized in that, for ensuring a complete release of the brakes, the electric motor (42) is supplied during the specific phase of release by an electric current superior to that necessary for ensuring the compression of the actuating spring (26) in complete release position of the brakes, then after this release is supplied by an electric current lower than the one necessary for ensuring this compression of the spring but sufficient for keeping the brakes in complete release position in using the friction hysteresis of the screw-nut system (34, 33) for reducing the permanent thermal charge of the electric motor in the released brakes position.

FIG. 2

FIG.1